# EUROPEAN PATENT APPLICATION

(11) **EP 4 137 390 A1**
(43) Date of publication of application: **22.02.2023**
(21) Application number: 21191884.2
(22) Date of filing: 18.08.2021
(51) Int. Cl.: B62D 29/04, B62D 33/04

(54) **A VEHICLE AND A METHOD OF MANUFACTURING A VEHICLE**

(71) Applicant: Karhof Groep B.V., 1446 TP Purmerend (NL)
(72) Inventor: Visser, Tim, 1066 NJ Amsterdam (NL); Buschgens, Jacobus Cornelis, 3704 JB Zeist (NL); Schaap, Foeke Jasper, 3561 GD Utrecht (NL); van der Zwaal, Olof Nicolaas, 3941 VC Doorn (NL)
(74) Representative: De Vries & Metman

(57) **Abstract**

A vehicle (1) includes a cargo carrying space enclosure (2), wherein the enclosure (2) has a tubular section (5) which is provided with a floor (6), a roof (7) and opposite walls (8) which extend between the floor (6) and the roof (7). At least the walls (8) and at least one of the roof (7) and the floor (6) have a laminar structure of interconnected layers (11). Each of the layers (11) is continuous along the walls (8) and the at least one of the roof (7) and the floor (6) as seen in a cross-section of the tubular section (5).

## Description

The present invention relates to a vehicle including a cargo carrying space enclosure, wherein the enclosure has a tubular section which is provided with a floor, a roof and opposite walls which extend between the floor and the roof.

Such a vehicle is known from NL 9200563. The enclosure of the cargo carrying space of the known vehicle comprises a plastic-based floor and two plastic-based shells which are connected to each other and to the floor. Each plastic-based shell comprises a wall and a part of the roof of the enclosure. The shells are provided with upright reinforcement parts which are located at a distance from each another.

An object of the invention is to provide a vehicle including an improved cargo carrying space enclosure.

This object is accomplished with the vehicle according to the invention, which is characterized in that at least the walls and at least one of the roof and the floor have a laminar structure of interconnected layers, wherein each of the layers is continuous along the walls and the at least one of the roof and the floor as seen in a cross-section of the tubular section.

An advantage of the vehicle according to the invention is that the laminar structure including continuous layers create a rigid structure.

In a particular embodiment the laminar structure of interconnected layers extends at the walls, the floor and the roof such that each of the layers is continuous along the walls, the floor and the roof as seen in a cross-section of the tubular section.

Preferably, the laminar structure of interconnected layers is formed by a plurality of windings of at least a sheet along the floor, the roof and the walls, since this can be manufactured in a relatively easy manner.

Adjacent layers may be interconnected to each other through an adhesive.

In a preferred embodiment the layers are made of cardboard, since this appears to provide a rigid and light-weight structure. Besides, cardboard is a relatively low-cost and environment-friendly material which can be recycled relatively easily. This lowers the threshold to replacing the cargo carrying space enclosure of a vehicle after damaging it, which in practice often occurs in case of delivery vehicles, for example.

The cardboard may be a corrugated cardboard comprising a corrugated sheet and a sheet liner which are fixed to each other, or the cardboard may be a honeycomb cardboard comprising a honeycomb sheet and a sheet liner which are fixed to each other. These types of cardboard are not only light-weight, but they also provide insulating properties to the tubular section, as well.

The tubular section may have a rectangular cross-section, but an alternative shape is also conceivable.

Preferably, at least a part of an outer side of the tubular section is provided with a water impervious coating, in particular in case the layers are made of cardboard.

The invention is also related to a method of manufacturing a vehicle as described hereinbefore, wherein the tubular section is made by supplying a sheet and a former which has an outer shape that substantially corresponds to the intended shape of the tubular section, wherein the sheet is wound several times about the former and adjacent windings are attached to each other, hence forming the tubular section including the laminar structure of interconnected layers, after which the former and the tubular section are separated from each other, wherein subsequently the tubular section is mounted to a vehicle chassis so as to form the vehicle. This manner of manufacturing appears to provide a strong structure of the tubular section, whereas it can be performed quickly and at low cost.

Alternatively, the tubular section is made by supplying a sheet and a former, wherein the sheet is wound several times about the former and adjacent windings are attached to each other to form a tubular structure, after which the former and the tubular structure are separated from each other, wherein the tubular structure is cut in its longitudinal direction so as to form two U-shaped parts, after which each of the U-shaped parts is mounted to at least one of a floor and a roof so as to form the tubular section, wherein subsequently the tubular section is mounted to a vehicle chassis so as to form the vehicle.

The sheet may be made of cardboard. The cardboard may be a corrugated cardboard comprising a corrugated sheet and a sheet liner which are fixed to each other, or the cardboard may be a honeycomb cardboard comprising a honeycomb sheet and a sheet liner which are fixed to each other.

Furthermore, the tubular structure may have a rectangular cross-section.

The invention will hereafter be elucidated with reference to very schematic drawings showing embodiments of the invention by way of example.
Fig. 1 is a perspective view of an embodiment of a vehicle according to the invention.
Fig. 2 is a similar view as Fig. 1, showing a part of a cargo carrying space enclosure of the vehicle on a larger scale.
Fig. 3 is a similar view as Fig. 2, showing a rear part of the cargo carrying space enclosure.
Fig. 4 is a sectional view of a sheet of corrugated cardboard.
Fig. 5 is a perspective view of a former for manufacturing a tubular section of the cargo carrying space enclosure as shown in Fig. 2.
Fig. 6 is an enlarged view of a cross-section of a part of the cargo carrying space enclosure as shown in Fig. 2, which part is indicated by VI in Fig. 2.
Fig. 7 is a perspective view of a device for manufacturing the tubular section by using the former as shown in Fig. 5.
Fig. 8 is an enlarged side view of a part of the device as shown in Fig. 7.
Fig. 9 is an illustrative view of manufacturing two tubular sections of respective cargo carrying space enclosures, each suitable for an alternative embodiment of a vehicle according to the invention.

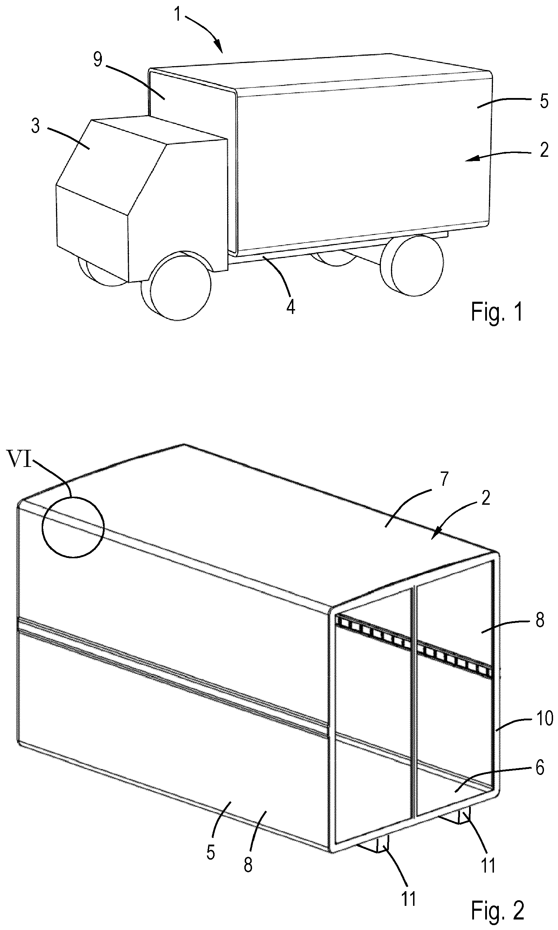

Fig. 1 shows an embodiment of a vehicle 1 including a cargo carrying space enclosure 2 according to the invention. The vehicle 1 is intended to be used as a delivery truck. It has a cabin 3 which is separate from the cargo carrying space enclosure 2. The cabin 3 and the cargo carrying space enclosure 2 are mounted on a chassis 4.

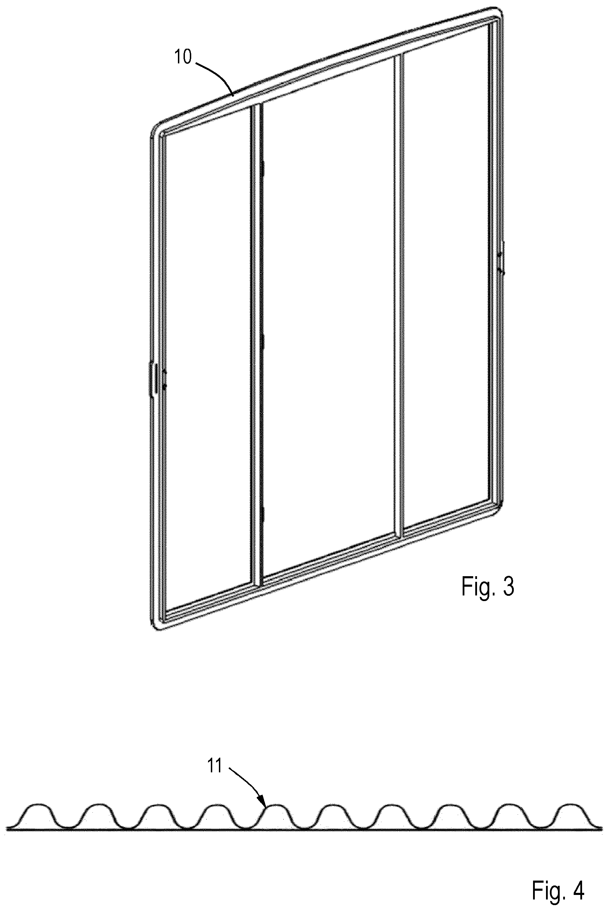

The cargo carrying space enclosure 2 is shown in greater detail in Fig. 2. It has a tubular section 5 which comprises a floor 6, a roof 7 and opposite walls 8 which extend between the floor 6 and the roof 7. A front side 9 of the cargo carrying space enclosure 2 is closed, for example by a plastic panel which is fixed to an axial front end of the tubular section 5, see Fig. 1. A rear side of the cargo carrying space enclosure 2 which is located opposite to the front side 9 comprises a rear frame 10 for supporting doors (not shown). The rear frame 10 is shown separately in Fig. 3. It may be made of plastic and possibly manufactured by means of 3D printing. The rear frame 10 is fixed to an axial rear end of the tubular section 5. The floor 6 of the tubular section 5 is provided with two parallel longitudinal beams 11 at an outer side of the tubular section 5, which beams 11 can be mounted to the chassis 4.

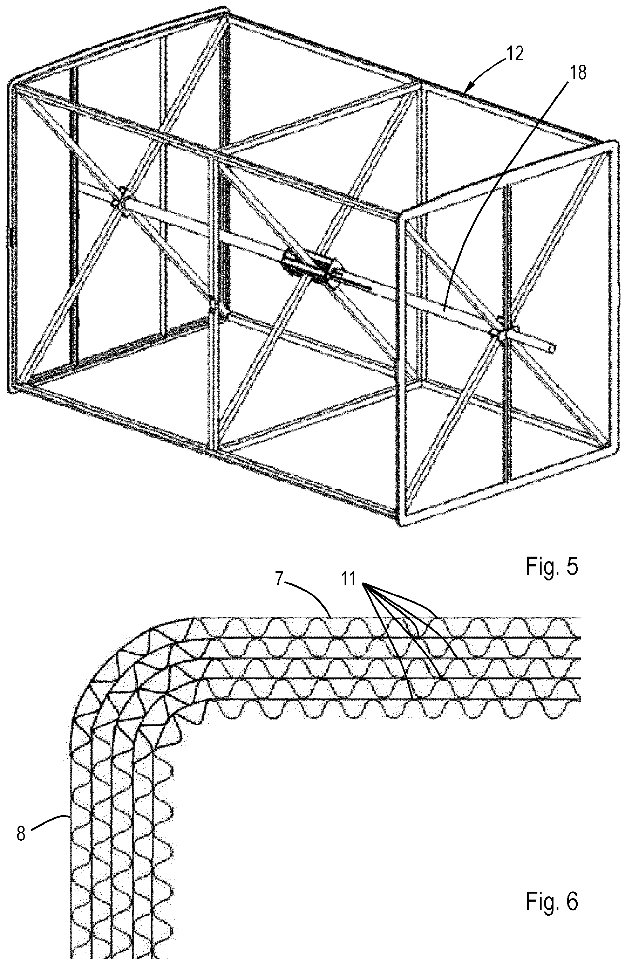

The tubular section 5 is made of a sheet of corrugated cardboard 11, of which a part is shown in Fig. 4. The sheet of corrugated cardboard 11 comprises a corrugated foil and a foil liner which are fixed to each other, but an alternative sheet of corrugated cardboard 11 is conceivable, for example a sheet which comprises a corrugated foil that is sandwiched between opposite foil liners. The tubular section 5 as shown in Fig. 2 is manufactured by winding the sheet of corrugated cardboard 11 several times about a former 12 which is shown in Fig. 5. The windings of the sheet of corrugated cardboard 11 are fixed to each other by an adhesive. This results in a laminar structure of interconnected layers, wherein each of the layers is continuous along the floor 6, the roof 7 and the walls 8 as seen in a cross-section of the tubular section 5. Fig. 6 shows a part of the cross-section at a corner between the roof 7 and one of the opposite walls 8 of the tubular section 5. The number of layers depends on the stiffness requirements of the tubular section 5 and the thickness of the sheet of corrugated cardboard 11, but may be more than 10 layers for example.

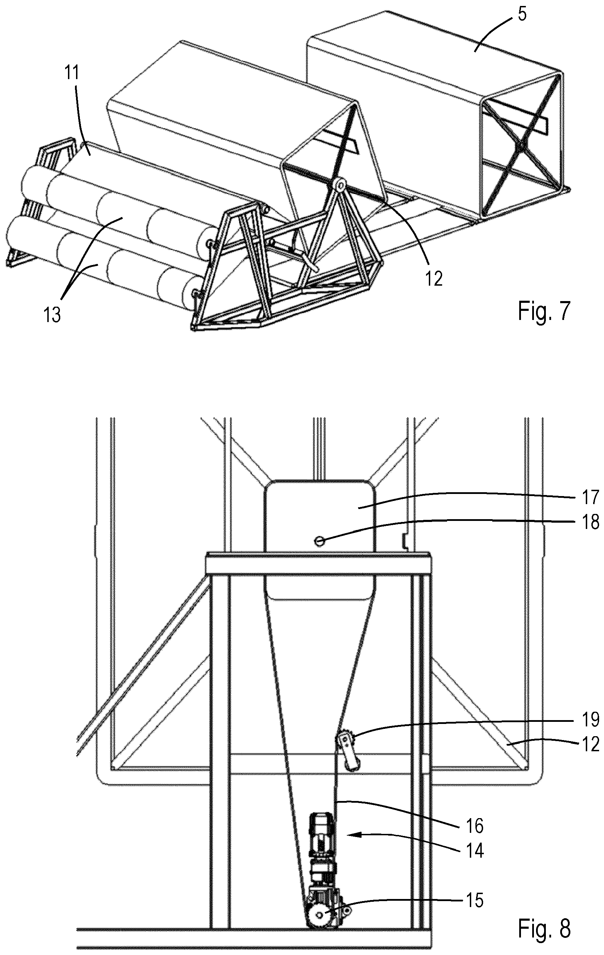

Fig. 7 shows a device for manufacturing the tubular section 5 of the cargo carrying space enclosure 2. In this case there are two rolls 13 which supply respective sheets of corrugated cardboard 11 to be wound around the former 12. The former 12 is rotatable by means of a driving mechanism 14 which is shown in Fig. 8. The driving mechanism 14 is provided with an electric motor including a driving sprocket 15, a chain 16 which is driven by the driving sprocket 15 and a rectangular gear 17 which is fixed to a rotatable shaft 18 of the former 12 and which is engaged by the chain 16. The rectangular gear 17 has curved corners. The driving mechanism 14 is also provided with a chain tensioner 19 to compensate for varying length of the chain 16 between the rectangular gear 17 and the driving sprocket 15 during rotation of the former 12. Due to the presence of the rectangular gear 17 the driving mechanism 14 minimizes velocity fluctuations of the sheets of corrugated cardboard 11 towards the former 12. The velocity fluctuations of the sheets of corrugated cardboard 11 towards the former 12 may be controlled in an alternative manner, for example by using a circular gear instead of the rectangular gear 17 and varying the speed of the electric motor during the winding process.

It is noted that due to supplying two sheets of corrugated cardboard 11 to the former 12 at the same time the number of rotations of the former 12 can be lower than in case of supplying a single sheet of corrugated cardboard 11 in order to achieve a certain number of layers.

After winding the sheets of corrugated cardboard 11 about the former 12 the resulting tubular structure is taken away from the former 12 by withdrawing it thereof in axial direction; in this case the resulting tubular structure forms the tubular section 5, which can be provided with the front side 9 and the rear frame 10 so as to form the cargo carrying space enclosure 2.

The tubular section 5 may be covered by a water-tight layer, for example a water-repellent coating. Furthermore, the tubular section 5 may be provided with openings, for example openings in the opposite walls 8 in order to provide access to the interior of the cargo carrying space enclosure 2.

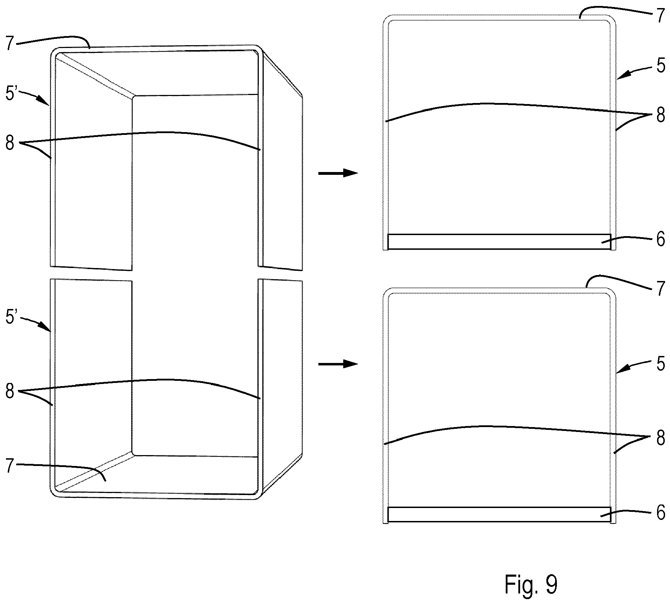

Fig. 9 illustrates an alternative method of manufacturing an alternative cargo carrying space enclosure 2. In this case, one or more sheets of corrugated cardboard 11 are wound about the former 12, but after removing the resulting tubular structure from the former 12 it is cut in its longitudinal direction so as to form two U-shaped parts 5', which may be called covers or hoods. The U-shaped parts 5' are mounted to separate floors 6, respectively, so as to form two tubular sections 5. In this embodiment, each of the layers of the tubular section 5 is continuous along the roof 7 and the walls 8 as seen in a cross-section of the tubular section 5.

The invention is not limited to the embodiments shown in the drawings and described hereinbefore, which may be varied in different manners within the scope of the claims and their technical equivalents. For example, the cardboard may be a honeycomb cardboard comprising a honeycomb sheet and a sheet liner which are fixed to each other, or the layers may be made of an alternative light-weight material, for example recycled plastic. The tubular section may have a different orientation with respect to the chassis; for example, its longitudinal direction may extend transversely with respect to the driving direction of the vehicle. The tubular section may also have an alternative shape, for example a polygonal cross-section. In such a case the rectangular gear of the device for manufacturing the tubular section may have a corresponding shape. Furthermore, the embodiments of the cargo carrying space enclosure as described hereinbefore are applicable to a large range of vehicle types, for example for delivery vehicles, cargo bikes, etc.

## Claims

1. A vehicle (1) including a cargo carrying space enclosure (2), wherein the enclosure (2) has a tubular section (5) which is provided with a floor (6), a roof (7) and opposite walls (8) which extend between the floor (6) and the roof (7), **characterized in that** at least the walls (8) and at least one of the roof (7) and the floor (6) have a laminar structure of interconnected layers (11), wherein each of the layers (11) is continuous along the walls (8) and the at least one of the roof (7) and the floor (6) as seen in a cross-section of the tubular section (5).

2. A vehicle (1) according to claim 1, wherein the laminar structure of interconnected layers (11) extends at the walls (8), the floor (6) and the roof (7) such that each of the layers (11) is continuous along the walls (8), the floor (6) and the roof (7) as seen in a cross-section of the tubular section (5) .

3. A vehicle (1) according to claim 2, wherein the laminar structure of interconnected layers is formed by a plurality of windings of at least a sheet (11) along the floor (6), the roof (7) and the walls (8).

4. A vehicle (1) according to any one of the preceding claims, wherein adjacent layers (11) are interconnected to each other through an adhesive.

5. A vehicle (1) according to any one of the preceding claims, wherein the layers (11) are made of cardboard.

6. A vehicle (1) according to claim 5, wherein the cardboard is a corrugated cardboard comprising a corrugated sheet and a sheet liner which are fixed to each other, or the cardboard is a honeycomb cardboard comprising a honeycomb sheet and a sheet liner which are fixed to each other.

7. A vehicle (1) according to any one of the preceding claims, wherein the tubular section (5) has a rectangular cross-section.

8. A vehicle (1) according to any one of the preceding claims, wherein at least a part of an outer side of the tubular section (5) is provided with a water impervious coating.

9. A method of manufacturing a vehicle (1) according to any one of the preceding claims, wherein the tubular section (5) is made by supplying a sheet (11) and a former (12) which has an outer shape that substantially corresponds to the intended shape of the tubular section (5), wherein the sheet (11) is wound several times about the former (12) and adjacent windings are attached to each other, hence forming the tubular section (5) including the laminar structure of interconnected layers, after which the former (12) and the tubular section (5) are separated from each other, wherein subsequently the tubular section (5) is mounted to a vehicle chassis (4) so as to form the vehicle (1).

10. A method of manufacturing a vehicle (1) according to claim 1, wherein the tubular section (5) is made by supplying a sheet (11) and a former (12), wherein the sheet (11) is wound several times about the former (12) and adjacent windings are attached to each other to form a tubular structure, after which the former (12) and the tubular structure are separated from each other, wherein the tubular structure is cut in its longitudinal direction so as to form two U-shaped parts (5'), after which each of the U-shaped parts (5') is mounted to at least one of a floor (6) and a roof (7) so as to form the tubular section (5), wherein subsequently the tubular section (5) is mounted to a vehicle chassis (4) so as to form the vehicle (1).

11. A method according to claim 10, wherein the sheet (11) is made of cardboard.

12. A method according to claim 11, wherein the cardboard is a corrugated cardboard comprising a corrugated sheet and a sheet liner which are fixed to each other, or the cardboard is a honeycomb cardboard comprising a honeycomb sheet and a sheet liner which are fixed to each other.

13. A method according to any one of the claims 10-12, wherein the tubular structure has a rectangular cross-section.
